# EUROPEAN PATENT SPECIFICATION

(11) **EP 4 198 110 B1**
(45) Date of publication and mention of the grant of the patent: **17.09.2025**
(21) Application number: 22214165.7
(22) Date of filing: 16.12.2022
(51) Int. Cl.: C10L 9/08, C09K 17/02

(54) **A METHOD FOR TURNING A SUGAR BEET PROCESSING WASTE INTO A HYDROCHAR FOR AGRONOMIC AND OTHER USES, AND PRODUCT OBTAINED THROUGH SUCH PROCEDURE**
VERFAHREN ZUM UMWANDELN VON ZUCKERRÜBENVERARBEITUNGSABFALL IN EINE HYDROKOHLE FÜR LANDWIRTSCHAFTLICHE UND ANDERE VERWENDUNGEN UND DURCH SOLCH EIN VERFAHREN ERHALTENES PRODUKT
PROCÉDÉ POUR TRANSFORMER DES DÉCHETS DE TRANSFORMATION DE BETTERAVES À SUCRE EN HYDROCHARBON POUR DES UTILISATIONS AGRONOMIQUES ET AUTRES, ET PRODUIT OBTENU PAR CE PROCÉDÉ

(30) Priority: 17.12.2021 IT 202100031703
(43) Date of publication of application: 21.06.2023
(73) Proprietor: Pieri Ecologia, 55011 Altopascio LU (IT)
(72) Inventor: RASPOLLI GALLETTI, Anna Maria, 56021 Cascina (PI) (IT); LICURSI, Domenico, 56123 Pisa (IT); ANTONETTI, Claudia, 55100 Lucca (IT); FULIGNATI, Sara, 56121 Cascina (PI) (IT); MARTINELLI, Marco, 56125 Pisa (IT)
(74) Representative: ABM Agenzia Brevetti & Marchi

(56) References cited:
- DE-A1- 102013 013 268
- WILK MALGORZATA ET AL: "The effects of hydrothermal carbonization operating parameters on high-value hydrochar derived from beet pulp", RENEWABLE ENERGY, PERGAMON PRESS, OXFORD, GB, vol. 177, 31 May 2021 (2021-05-31), pages 216 - 228, XP086726949, ISSN: 0960-1481, [retrieved on 20210531], DOI: 10.1016/J.RENENE.2021.05.112

## Description

### Scope of the invention

The present invention relates to a method for turning an agricultural waste comprising a sugar beet processing waste into a useful product. The invention also relates to a product for agronomic use obtained by said method.

### Description of the prior art

As well known, the process to obtain sugar from beet produces a huge amount of waste that is still rich in valuable components, in particular, polysaccharides and proteins. The most relevant waste fractions consist of cossettes and leaves. Normally, a given amount of sugar beet provides about half its own weight of cossettes, which contain about 10 to 20 wt% of dry matter.

This waste material is mainly used to make animal food products. However, the high content of polysaccharides, such as cellulose and hemicellulose, as well as the low lignin content, encourages to search more interesting and profitable applications of this biomass.

Various processes are known to valorise biomass from agriculture. In particular, pyrolysis processes are known, where an agricultural biomass is treated at such a high temperature as 500°C or more, for a predetermined time, under substantially anaerobic conditions. By this way, devolatilization occurs, leading to a gas including lower molecular weight compounds, mainly CO, CO₂, CH₄, and to a liquid or oil including higher molecular compounds, mainly carboxylic acids, esters, aromatics and ketones. The aromatisation of the solid fraction leads to the 'biochar', which has a higher calorific value than the starting feedstock, more similar to that of lignite and, for this reason, is often used as a fuel. Biochar from agricultural biomass can also be obtained through other thermal processes similar to pyrolysis, such as torrefaction and gasification.

A possible alternative use of biochar is the production of soil improvers. This use can be useful for the fight against global warming, as it allows part of the carbon of atmospheric CO₂ to be fixed in the soil in a stable manner, given the vegetal source of biochar.

Currently, the Regulation (EU) 2019:1009 of the European Parliament and of the Council does not allow biochar from agricultural residues as a raw material to produce fertilisers and related products. However, this regulation mentions biochar among those materials for which appropriate evaluation criteria are expected to be adopted. Possible toxicological and safety reference parameters are given in Table 1.

**- Table 1 -**

| | |
|---|---|
| Stability: H/C_{org} | <0.7 |
| Cl⁻ | 450 |
| IPA16 | <6 mg/kg dry |
| PCDD/F | <20 ng/kg dry |
| PCB | <0.8 mg/kg dry |
| Inorganic arsenic (As) | ≼40 mg/kg dry |
| Cadmium (Cd) | ≼2 mg/kg dry |
| Hexavalent chromium (Cr VI) | ≼2 mg/kg dry |
| Lead (Pb) | ≼120 mg/kg dry |
| Mercury (Hg) | ≼1 mg/kg dry |
| Nickel (Ni) | ≼50 mg/kg dry |
| Copper (Cu) | ≼200 mg/kg dry |
| Zinc (Zn) | ≼500 mg/kg dry |

However, the biochar produced by pyrolysis and similar processes has several drawbacks.

First, these processes involve particularly severe reaction conditions, in particular high reaction temperatures, as well as short residence times, in order to recover the above-mentioned oil and/or gas. This is the main object of pyrolysis and related processes, while the solid biochar is a co-product which is generally obtained with modest yields.

The high processing temperatures of pyrolysis and similar processes also lead to other critical issues, such as:
- high implementation costs;
- considerable energy requirements, and therefore high running costs;
- possible formation of polycyclic aromatic hydrocarbons (PAHs), which are particularly undesirable compounds, even in trace amounts, if biochar is intended for use in agriculture, in which case these harmful chemicals would be disseminated into the environment and/or accumulated in the food chain.

Moreover, pyrolysis and similar processes are not suitable for directly processing wet biomasses, such as sugar beet cossettes and possibly leaves, as these would require preliminary drying, thus increasing energy consumption.

Furthermore, biochar from pyrolysis of plant waste/biomasses generally has an ash content between 10% and 20% by weight, which corresponds to a strong alkalinity. Therefore, the use of this in agriculture would be limited to soils/crops that tolerate such conditions, or to very acidic soils that require alkalinisation.

Hydrothermal carbonisation (HTC) thermochemical processes are also known, in which the biomass is treated in an autoclave, in the presence of water, normally at temperatures between 150°C and 350°C, thus much lower than those of pyrolysis. These conditions are maintained for a time long enough to convert the biomass components by dehydration, condensation and aromatisation reactions, which take place with a considerable decrease in hydrogen and oxygen content and a corresponding increase in carbon content. The biochar obtained by this way is known as 'hydrochar'.

In the current state of the art, HTC has been used to process the plant biomasses shown in Table 2. However, H/C and O/C molar ratios are still too high in comparison to the values of the current pyrolysis biochar standard, which is currently expected as a reference for the evaluation of the quality of the hydrochar.

**- Table 2 -**

| **Biomass** | **Operating conditions** | **H/C** | **O/C** |
|---|---|---|---|
| Coconut fibre | 350°C, 30 min. | 0.74 | 0.21 |
| Eucalyptus leaves | 350°C, 30 min. | 1.01 | 0.22 |
| Miscanthus | 250°C, 5 min. | 1.04 | 0.39 |
| Fruit peels | 220°C, 1 h | 1.20 | 0.45 |
| Pine wood powder | 265°C, 20 h | 0.90 | 0.18 |
| Corn cobs | 230°C, 6 h | 1.18 | 0.41 |
| Corn stalks | 250°C, 4 h | 0.93 | 0.17 |
| *Tamarix ramosissima* | 250°C, 4 h | 0.90 | 0.22 |
| Beet pulp | 250°C, 20 h | 1.18 | 0.18 |
| Wood bark | 250°C, 20 h | 1.00 | 0.18 |
| Wood sawdust | 250°C,30 min. | 1.22 | 0.31 |
| Hyacinth | 240°C, 24 h | 1.03 | 0.21 |
| Bamboo | 260°C, 60 min. | 0.99 | 0.25 |

With the exception of beet pulp, anyway much more useful for producing sugar, these biomasses require the addition of water, in order to assist the mixing of the biomass being processed, and to improve mass and heat transfer. The water requirement leads to the production of huge amounts of liquid waste that must be treated. This would make the process economically disadvantageous and industrially unattractive.

Considering the relatively low value of the end product, there is a particular need to avoid adding water from outside, and to exploit the moisture of the biomass as the only source of water. This aspect has been underestimated so far, but is important to technologically simplify the HTC process and to promote the industrialisation thereof.

Wilk et al, "The effects of hydrothermal carbonization operating parameters on high-value hydrochar derived from beet pulp", Renewable Energy 177 (2021) 216-228, recently proposed an HTC treatment for spent beet pulp, applied to a particularly dilute suspension in which abundant water is added to the pulp. Specifically, in the described HTC experimental procedures, additional 320 g of deionised water is added to 20 g of moist spent beet pulp, i.e. already containing 80% of water. The large amount of additional water, and the resulting dilution, has the disadvantage of decelerating the liquid-solid heat transfer, which makes the solid carbonisation process less efficient. Moreover, the need to cool down the reacted mass, in order to recover the carbonaceous residue, results in a considerable waste of energy.

DE 10 2013 013 268 A1 proposes a pyrolysis post-treatment for a hydrochar produced by HTC, in order to lower the H/C and O/C molar ratios from 0.9 and 0.28 to 0.73 and 0.15, respectively, after pyrolysis. By this post-pyrolysis, a product advantageously usable for energy applications is expected. However, the introduction of such a post-treatment brings with itself the above-mentioned disadvantages of the pyrolysis, i.e. high implementation and energy costs, formation of PAHs, need for drying before pyrolysis, etc.

### Summary of the invention

It is therefore an object of the present invention to provide a thermochemical method to valorise cossettes as a sugar beet processing waste, obtaining a product as a solid residue that is well suited for use as a raw material to make an agricultural soil improver.

It is also an object of the invention to provide such a method that yields a solid product with a high degree of carbonisation, i.e. a product with H/C and O/C molar ratios lower than the corresponding values obtained by the prior art processes, in particular, a product with H/C and O/C molar ratios low enough to be suitable for making soil improvers.

It is also an object of the invention to provide such a method in which a solid product is obtained substantially free from such harmful compounds, such as polycyclic aromatic hydrocarbons and dioxins.

It is also an object of the invention to provide such a method in which a high-nitrogen and low-phosphorous solid product is obtained, which is desirable for producing agricultural soil improvers.

It is likewise an object of the invention to provide such a method to obtain an agricultural soil improver that can be used in any soils or crops, beyond those requiring/tolerating strongly alkaline conditions.

It is also an object of the invention to provide such a method for which investment and operating costs are lower than in the prior art.

It is also an object of the invention to provide a product obtained from sugar beet processing waste, e.g. cossettes, and useful as a raw material for making soil improvers, which has the above-mentioned features.

It is also an object of the present invention the use of the product obtained by the above method as an agricultural soil improver, or as a fuel.

The above-mentioned objects are achieved by a hydrothermal carbonisation method for turning a biomass comprising a sugar beet processing waste into a useful product, as defined in annexed claim 1. Advantageous modifications and embodiments of the method are defined in the dependent claims 2 to 9.

According to the invention, the method comprises the steps of:
- prearranging a treatment container equipped with a heating device;
- prearranging a sugar beet processing waste,
   wherein the sugar beet processing waste comprises:
   - sugar beet cossettes, and possibly also beet leaves;
   - a determined humidity content;
- introducing a feed including the sugar beet processing waste into the treatment container;
- heating the feed introduced into the treatment container up to a predetermined processing temperature;
- maintaining the feed under processing in the treatment container at the above processing temperature and for a predetermined processing time,
   wherein the processing temperature is set between 260°C and 300°C, wherein the biomass feed to the treatment container comprises a content of water between 70% and 90% by weight,
   wherein the processing time is at least 80 minutes,
   wherein the processing temperature and time are selected to enable dehydration, condensation and aromatisation reactions of the sugar beet processing waste, so as to turn the sugar beet processing waste into a useful product having a carbon content higher than the sugar beet processing waste and an oxygen and hydrogen content lower than the sugar beet processing waste.

The above processing conditions, as shown by the experiments, mainly the processing temperatures and water content in the feed and therefore in the reacting biomass, allow several advantages over the known thermal processes of both pyrolysis and hydrothermal processes involving feedstocks different from those used in the present method.

In particular, these process conditions make possible to significantly reduce not only the investment costs for building the plants, but also the operating costs associated with energy consumption. In this regard, Table 3 shows a comparison of the energy balance of a hydrothermal carbonisation process with literature data concerning pyrolysis and gasification processes. The energy values are expressed as required MJ per 1 kg of biomass feed, with an average humidity content of 80%.

**- Table 3 -**

| **Process** | **Energy demand (MJ)** | | | | **Energy produced (MJ)** |
|---|---|---|---|---|---|
| | Pre-drying | Exercise | Post-drying | Total | |
| Pyrolysis | 2.13 | 1.07 | - | 3.20 | 3.38 |
| Gasification | 2.13 | 1.45 | - | 3.58 | 3.18 |
| Hydrothermal carbonisation HTC | - | 1.92 | 0.46 | 2.50 | 2.74 |

Moreover, by operating as described above, a hydrochar is obtained that has favourable carbonization parameters in view of the target agrotechnical applications of the product, as shown throughout the annexed experiments.

More in detail, products are obtained whose elemental composition has H/C and O/C molar ratios (Table 6) comparable or lower than those of the products obtained when processing different biomasses (Table 2). In particular, under specific operating conditions reported later in this patent application, H/C ratio values of about 0.7 were obtained, while for the other biomasses the hydrothermal carbonisation generally leads to higher values of H/C. According to Italian regulations, 0.7 is the maximum admissible value to allow hydrochar-related products for use in the production of soil improvers, and it is also the reference value for future European regulations, whose preparation is in progress (Table 1).

Concerning the feed water content, the present method overcomes the drawbacks of cited prior art Wilk et al., operating in far stronger dilution conditions than in the present method, due to the large amount of water added to the biomass, as indicated above. In particular, while in Wilk et al., for each 20g of spent cossettes, already containing 80% of water, further 320g of deionised water are added, in the present invention substantially no water is added, using the spent cossettes as such with their water content about 70% to 90%. Therefore, in Wilk et al. in the heating step in addition to heating each 20g of spent cossettes further 320g of water, namely sixteen times, of water have to be heated. Instead, in the present invention, with the much lower water content needed a much more effective liquid-solid heat transfer is possible, which allows obtaining a better carbonisation extent in shorter reaction times, besides avoiding huge energy and time waste due to water processing, as well as in cooling down and concentrating the reacted biomass.

Moreover, by operating under the above-mentioned HTC conditions, products with an extremely low PAH content can be obtained. In particular, under determined conditions, PAH concentration values lower than 0.1 mg/kg are obtained, which are much lower than the corresponding values of hydrochar from HTC treatment of different agricultural biomasses (Table 10). The PAH concentrations obtained by the method according to the invention are also lower than 6 mg/kg (Table 1), which is the commonly-accepted maximum PAH content value for admissibility of a material used to make soil improvers, also taking into account the maximum values of 4 and 12 mg/kg, considered by the European Biochar Certificate, IBI (International Biochar Initiative), 2015, Standardized Product Definition and Product Testing Guidelines for Biochar that Is Used in Soil. for the 'premium' and 'normal' grade of biochar, respectively.

An explanation of the lower PAH content in the HTC products, in comparison to pyrolysis, can be the following. In the pyrolysis, the phenols of lignin origin react directly to form PAHs at the high processing temperatures, whereas, in the hydrothermal treatment, water would solubilise, albeit to a limited extent, the simple phenols of lignin origin, allowing them to be adsorbed in the hydrochar, and thus reducing their reactivity.

Moreover, under the above-mentioned process conditions, the hydrothermal carbonisation of beet cossettes does not substantially form dioxins and corrosive species by turning the organic chlorine of high organic chlorine feeds into inorganic chlorine.

Moreover, the hydrochar obtained by the method according to the invention is also substantially free from heavy metals.

Briefly, the HTC treatment is more environmentally sustainable than the pyrolysis and the above-mentioned related thermal processes.

Furthermore, as shown by the test results below, e.g. in Tables 6 and 8, the hydrochar obtained according to the invention is rich enough in phosphorus and nitrogen elements, making effective its use as an agricultural soil improver.

In addition, the hydrochar produced according to the invention generally exhibits lower pH values and lower ash content in comparison with the biochars obtained from pyrolysis, as shown in Table 8. Therefore, the hydrochar obtained by the claimed method can be more suitably used on crops requiring acidic conditions, or when acidification of soils that are too alkaline is required.

Moreover, hydrothermal carbonisation treatment is particularly advantageous, if compared with pyrolysis and similar treatments, because it makes possible to treat very wet biomasses such as residual beet cossettes and possibly leaves of sugar processing, without requiring preliminary drying. Significant energy savings are therefore possible, as exemplified in Table 3.

In addition, as shown by some of the examples below, by operating under the conditions according to the invention, hydrochars can be obtained that are yet suitable for producing soil improvers, at an average yield that is higher than or at least comparable to the yield of thermochemical processes taking place at higher temperatures, such as pyrolysis and similar thermal processes.

Specifically, the treatment container is a tank configured to be hermetically closed, such as an autoclave, and steps are provided of:
- sealing the treatment container after introducing the feed thereinto, so as to cause water including the humidity content of the sugar beet processing waste itself to evaporate at least partially during the heating the feed, and to pressurise the treatment container accordingly;
- opening and depressurising the treatment container, after maintaining the feed at the processing temperature for the above processing time.
In other words, the method can be advantageously carried out batchwise, i.e. separate production batches are obtained in the time, and the feed consists of a plurality of charges, each comprising a predetermined amount of the sugar beet processing waste to be treated.

Preferably, the processing temperature is set between 280°C and 300°C and the processing time is set between 80 minutes and 200 minutes. Under such conditions, as some of the examples below show, a useful product is obtained that has a much higher carbon content than the product obtained by performing the treatment at lower temperatures. More specifically, the above-mentioned H/C ratio values of about 0.7 are obtained (Table 6) under the above indicated process conditions, involving reaction times that are feasible for an industrial scale production.

Concerning the water content of the feed, preferably, the water content of the feed is substantially the same amount as the humidity content of the sugar beet processing waste itself. In other words, the water of the feed can be the water originally contained in the cossettes-containing waste as obtained from sugar beet processing. Sugar beet processing waste mainly containing cossettes and possibly leave, have a dry matter content that is usually between 10% and 25% of the total weight, in particular the dry matter content is about 20%. The corresponding humidity content, as indicated above, allows the container treatment, in particular the autoclave, to be directly loaded with the waste as such, and the hydrothermal carbonisation treatment to be carried out without adding external water, and only the water originally contained in the sugar beet processing waste as such is exploited in the process. This simplifies both the process and the plant, and the investment and operating costs related to the method become even lower accordingly.

Moreover, as confirmed by the experiments, in these conditions the agitation of the biomass being treated surprisingly turned out to be unnecessary, which further simplifies the equipment and the process itself.

The useful product leaving the treatment container after HTC reactions is in the form of a slurry, which preferably requires a further filtration step, thereby obtaining the useful product as a mud-like matter. This is easier and less expensive to handle than the slurry. However, the direct introduction into the soil of the slurry as such, i.e., as it is produced by HTC, is not excluded.

Advantageously, after this possible filtration step, a step of washing the mud-like useful product with water is provided. By this way, such water-soluble impurities as metal cations and chloride ions can be effectively removed.

The wet hydrochar obtained according to the invention is well-suited for use as such in the soil, without requiring final drying, which allows further energy savings. However, the method can comprise a further step of removing water from the useful product as obtained by the method until a predetermined residual humidity content is left therein, in particular until a substantially dry useful product is obtained. The step of removing water can include a step of drying the useful product in the mud-like state obtained by the filtration, or it can even comprise a step of evaporating water from the slurry, followed by drying the useful product as obtained after evaporation. The substantially dry state of the useful product makes it easier to handle and/or store and/or transport, which simplifies marketing and use the product remotely from the production site. As shown in Table 3, even if a final drying of the useful product is performed, under determined process conditions, HTC treatment would be still cost-effective in comparison with pyrolysis and gasification processes.

### Brief description of the drawings

Further features and advantages of the present invention will be better understood by the following description of embodiments and modifications thereof, made by way of example and not of limitation, with reference to the accompanying drawings, in which
- Fig. 1 shows a block diagram of a method, according to the present invention, based on hydrothermal carbonisation of an agricultural biomass comprising sugar beet cossettes and possibly leaves, as a sugar beet processing waste;
- Fig. 2 shows a block diagram of the method, according to the invention, when the latter is operated batchwise;
- Figs. 3 and 4 shows flow charts of production lines to perform the method of Fig. 2;
- Fig. 5 shows a block diagram of a hydrothermal carbonisation method, according to an embodiment of the invention, in which a filtration step is provided of the hydrochar obtained as a slurry after the hydrothermal carbonisation reactions;
- Fig. 6 shows a block diagram of a hydrothermal carbonisation method according to an embodiment of the invention, in which a step is provided of drying the hydrochar obtained by hydrothermal carbonisation;
- Fig. 7 shows a flowchart of a production line to perform the method of Fig. 5;
- Fig. 8 shows the FT-IR spectra of hydrochar products obtained in a first group of HTC tests treating the above-mentioned biomass;
- Fig. 9 is a diagram showing a correlation between the residual oxygen content in the hydrochar products of the first test group and the corresponding values of cation-exchange capacity, CEC;
- Fig. 10 shows the FT-IR spectra of the hydrochar products obtained in a second group of HTC tests treating the above-mentioned biomass;
- Figs. 11 and 12 show the results of SEM-EDS analysis of two exemplary hydrochar products obtained in the first and second test groups, respectively.

### Description of preferred embodiments

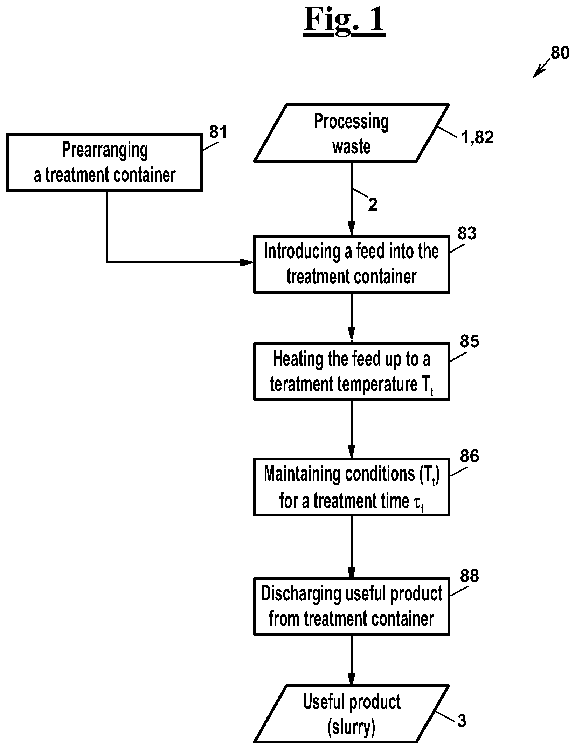

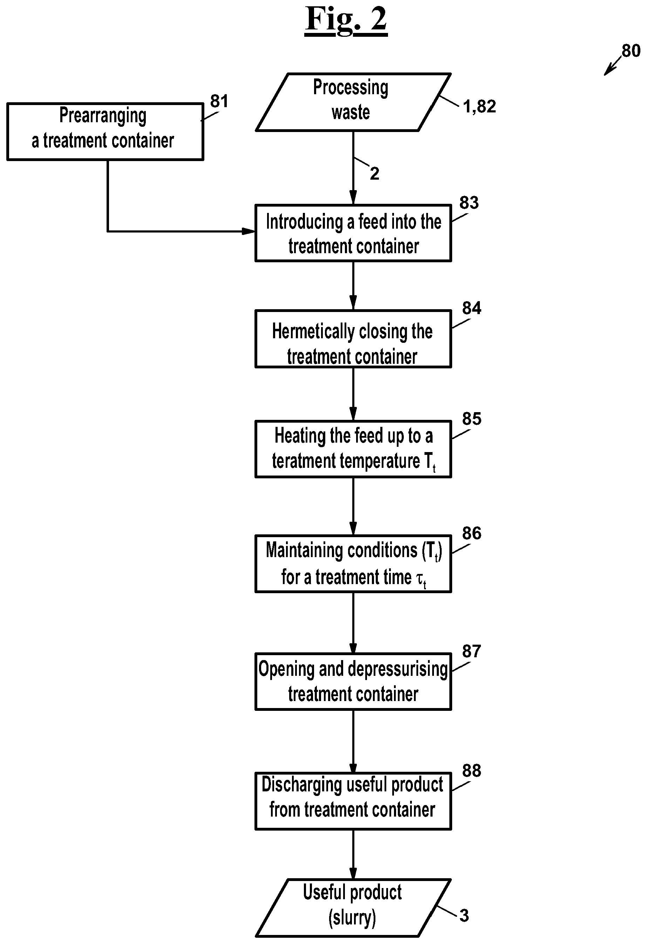

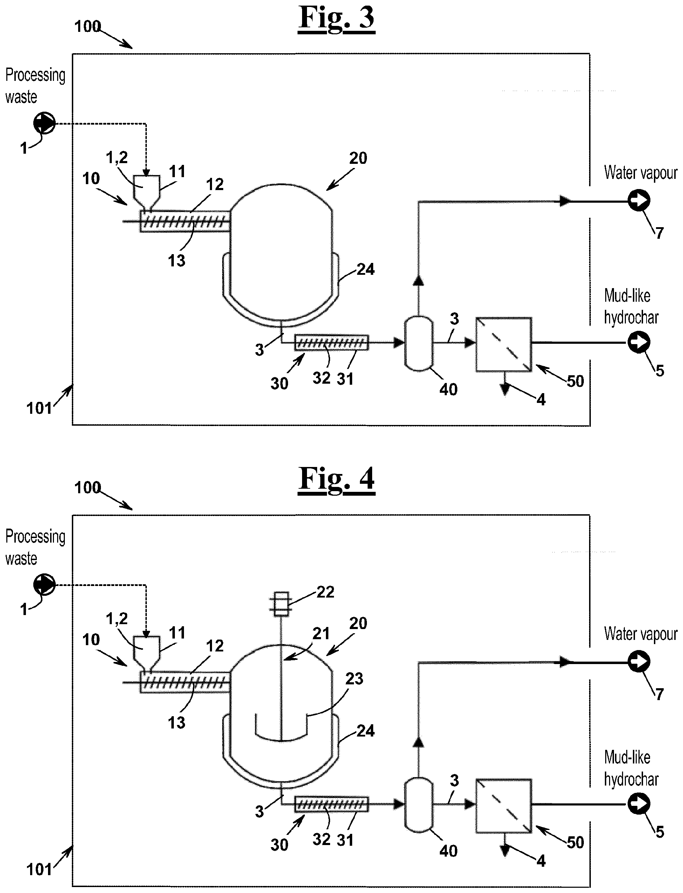

With reference to the block diagrams of Figs. 1 and 2, and to the flow chart of Figs. 3 and 4, a method 80 according to the invention is now described for turning a biomass 1 containing sugar beet cossettes into a useful product 3,5 in the form of a hydrochar, i.e., a hydrothermal carbonisation method of such a biomass. The biomass is commonly available as a sugar beet processing waste 1 containing a humidity content typically ranging between 70% and 90% by weight. Biomass or sugar beet processing waste 1 may also contain other parts of the beet, in particular leaves.

A production line 100 (Fig. 3) for carrying out method 80 batchwise, i.e. discontinuously, is also described, basically comprising a treatment unit 101 for obtaining the hydrochar in the form of a slurry 3 of, or the form of a mud-like material 5.

Method 80 (Fig. 1) comprises preliminary steps 81 of prearranging a treatment vessel or hydrothermal carbonisation reactor 20. In one embodiment suitable for operating the method batchwise, treatment vessel 20 preferably has the form of a tank 21. In some instances (Fig. 4), tank 21 can be equipped with a mechanical agitator 21, including an impeller 23 and a motor 22 to drive the same.

However, in an embodiment not shown, the treatment vessel can be a tubular reactor, not shown, which is suitable for a continuous process, or even a loop reactor, not shown, which can be easily implemented by a skilled person, on the basis of the operating conditions described herein.

Method 80 further comprises a step 82 of prearranging sugar beet processing waste 1, as well as a step 83 of introducing a feed 2 including sugar beet processing waste 1 into treatment container 20. In the case of a batchwise-operated process, feed 2 contains a predetermined amount of sugar beet processing waste 1.

Preferably, the amount of water in feed 2 is essentially the same as the water originally accompanying sugar beet processing waste 1.

A biomass loading device 10, preferably comprising a loading hopper 11, is connected to treatment container 20 to prepare feed 2 and introduce it into treatment container 20 (Fig. 3). In this case, a screw or auger device is mounted between loading hopper 11 and treatment container 20, including a tubular container 12 and a conveying screw or auger 13 rotatably arranged within the same to convey biomass 1 from hopper 11 to treatment container 20. Advantageously, conveying screw or auger 13 is also configured to reduce the size of the cossettes and possibly of the leaves and to homogenise feed 2.

Feed 2 includes the water content associated with sugar beet processing waste 1, but can also include additional water. However, sugar beet processing waste 1 is preferably fed as such to treatment container 20, i.e. without additional water.

If the method is operated batchwise, a step 84 of hermetically closing treatment vessel 20 is provided (Fig. 2), i.e. of hermetically closing the openings thereof, including one or more loading openings and a possible vent line to depressurise reactor 20, when required.

A step 85 follows of heating feed 2 introduced within treatment container 20, up to a predetermined processing temperature Tt set between 200°C and 320°C, preferably set between 280°C and 300°C, so as to cause the water of feed 2, including the humidity content of sugar beet processing waste 1, This humidity content is at least partially evaporated during heating step 85. If hermetically closed for a batchwise process, treatment container 20 is pressurised accordingly during step 85.

In this case, treatment vessel 20 is also configured to withstand a predetermined internal pressure, so that the hydrothermal carbonisation method can be carried out under pressure. Safety devices of treatment vessel 20 against overpressure are not described, as they are obvious to a skilled person.

In order to heat up feed 2, treatment container 20 is provided with a heating device 24 (Fig. 3), such as a heating jacket 24 or coil supplied with a suitable heating fluid. In embodiments not shown, instead of a heating fluid-supplied device, a microwave or induction device can be provided, which can be easily implemented by a skilled person on the basis of the operating conditions described herein.

In order to convert biomass 1 into useful product 3, a step 86 is provided of maintaining feed 2 being processed in treatment container 20 at processing temperature Tt for a predetermined processing time τₜ (Figs. 1 and 2). Processing time τₜ is at least 80 minutes or longer, and preferably shorter than 200 minutes.

During the step 86 of processing temperature Tt, dehydration, condensation, and aromatisation reactions of sugar beet processing waste 1 take place. As a result, the carbon content of the solid fraction of biomass 1 decreases, while the amounts of oxygen and hydrogen decrease. Sugar beet processing waste 1 is converted into a hydrochar accordingly, having the form of a slurry 3, due to its high-water content.

If method 80 is operated batchwise, once processing time τₜ has elapsed, a step 87 take place of opening and depressurising treatment container 20 and a step 88 of discharging slurry useful product 3 from treatment container 20 (Fig 2). To this purpose, a discharge device 30 of slurry hydrochar 3 is connected to treatment container 20 (Fig. 3). Preferably, also discharge device 30 comprises a screw or auger device, including a tubular container 31 and a conveying screw or auger 32 rotatably arranged within the same, to discharge and, at the same time, advantageously homogenise slurry hydrochar 3.

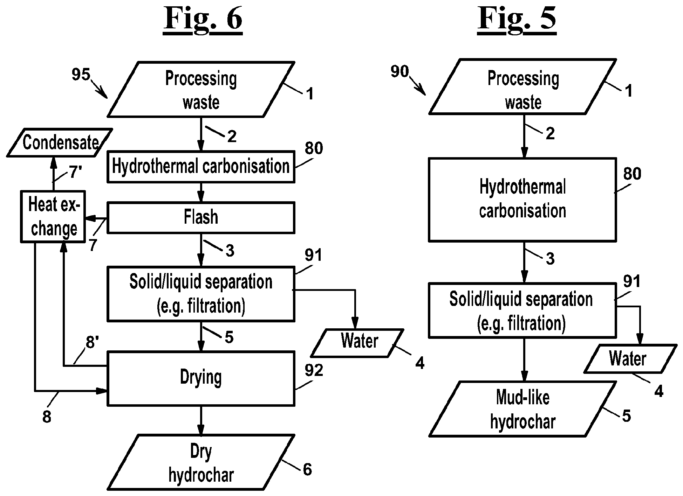

According to a modification of the invention, as shown in Fig. 5, in a method 90, a solid-liquid separation step 91 can be provided, in addition to the steps of method 80 of Figs. 1 or 2, for example a step 91 of filtering slurry hydrochar 3, to obtain useful product 5 in a compact, substantially palpable wet state, i.e. in a mud-like state. To this purpose, as still shown in Fig. 3, treatment unit 101 can comprise a solid-liquid separation device 50, for example a filter, such as a filter press 50, configured to receive slurry hydrochar 3 from discharge device 30, and to split it into a water stream 4 and a mud-like hydrochar 5 as the product of interest. In some applications, mud-like hydrochar 5 as such can be used as an agricultural soil improver, typically in soils neighbouring production line 100.

In order to remove water-soluble impurities from mud-like hydrocar 5 obtained from solid-liquid separation step 91, the method can include at least one step of washing such hydrochar with water (Fig. 5).

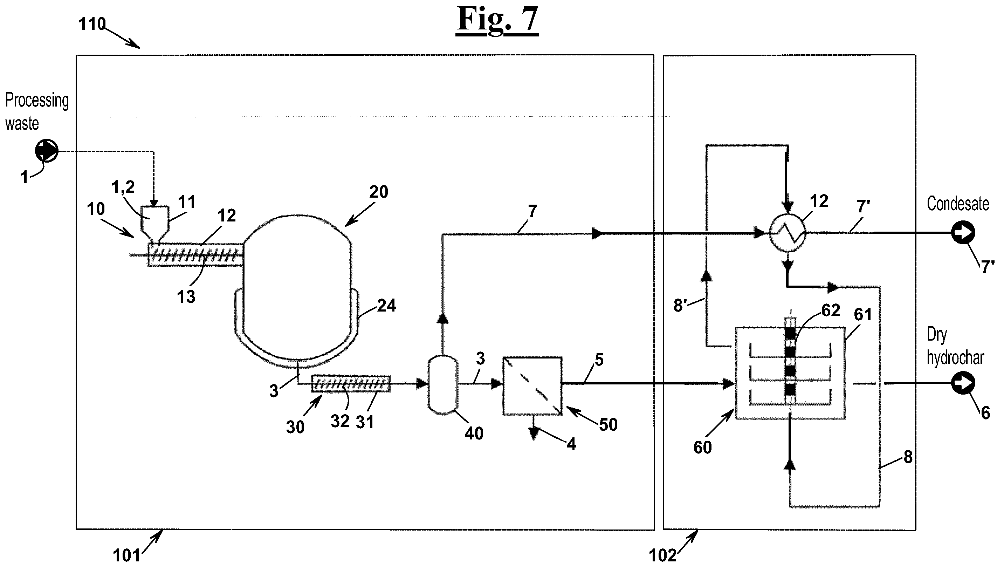

With reference to the block diagram of Fig. 6 and the flowchart of Fig. 7, a method 95 is now described, according to an embodiment of the invention, for turning a biomass 1 containing sugar beet cossettes into a substantially dry hydrochar 6, which is well-suited to be transported and used far from the production site. Method 90 comprises, after the steps of method 90 of Fig. 5, a step 92 of removing further water from mud-like useful product 5 to obtain a substantially dry hydrochar 6 containing a predetermined small residual humidity content.

To this purpose, production line 110 (Fig. 7) further comprises a drying unit 102 downstream of treatment unit 101, arranged to receive mud-like hydrocar 5 from solid-liquid separation device or filter 50 and to dry mud-like hydrocar 5 until the humidity content has fallen to or below the desired value. Drying unit 102 can comprise a conventional dryer, for example an air dryer 60, in particular, provided with a system of plates 62, rotatably arranged within a container 61, onto which mud-like hydrocar 5 is fed, as shown in Fig. 7.

Preferably, dryer 60 is associated with a system to recover heat from the hydrochar produced in treatment vessel 20. In one embodiment, still shown in Fig. 7, the heat recovery system comprises a flash chamber 40 arranged along the path of slurry hydrochar 3 and is configured to accomplish a separation of a portion of the water of slurry hydrochar 3, which is released as water vapour 7 due to the depressurisation that slurry hydrochar 3 undergoes upon entering flash chamber 40, while the remainder of slurry hydrochar 3 is conveyed towards solid-liquid separation device or filter 50. The heat recovery system further comprises a heat exchanger 42. In particular, one passageway of heat exchanger 42 is mounted along a pipe of steam 7 released by flash chamber 40, while and the other passageway is mounted along an air circuit, serially with respect to a heat exchange element of dryer 60. An air conveying means, typically a fan, not shown, is arranged along this air circuit in order to establish an air circulation between heat exchanger 42, acting as a condenser of steam 7, and the heat exchange element of dryer 61.

### EXAMPLES

A sugar beet processing waste mainly consisting of cossettes was treated in the hydrothermal carbonisation (HTC) conditions mentioned above. More in detail, two groups of tests were performed. In particular, in a first group of tests, the sugar beet processing waste was treated at processing temperature Tt, in the range 200-300°C, for a processing time τₜ of 85'. In a second group of tests, the sugar beet processing waste was treated at somewhat lower processing temperatures Tt, in the range 200-280°C for a longer processing time τₜ of 180'.

### Characterisation of the raw material used

The waste cossettes samples were dried in an oven at 105°C for 24 hours in order to assess the average dry matter content, which was found to be 17.5% by weight. Then, the dried solid waste was characterised by FT-IR spectroscopy, obtaining the results shown in Table 4, which were confirmed by subsequent elemental analysis.

**- Table 4 -**

| Cellulose | Hemicellulose | Acetyls | Lignin | Pectins | Extractives | Ashes |
|---|---|---|---|---|---|---|
| 21.8 | 22.7 | 2.4 | 9.7 | 11.2 | 16.0 | 3.4 |

Table 5 shows the SEM-EDS characterisation of beet cossettes ash.

**- Table 5 -**

| Ca | O | Mg | K | Na | Pa |
|---|---|---|---|---|---|
| 18.7 | 53.2 | 8.2 | 16.7 | 1.0 | 2.2 |

### First group of tests

The tests of the first group were performed under the reaction conditions already used to treat other biomasses. Six HTC tests, identified as HTC_1A ÷ HTC_6A, were performed in the 200-300°C range, during a reaction time of 85 minutes. Table 6 shows the hydrochar yield of each test, as a weight percentage of hydrochar with respect to the dry biomass. A CHNSO elemental analysis (% by weight) of the hydrochar obtained in each test is also shown in Table 6, along with the higher calorific value (HCV), calculated by a group-contribution method based on the above-mentioned elemental analysis. As anticipated, CHNSO elemental analysis and therefore the HCV are useful quality parameters to assess the carbonisation degree of the hydrochar product. The corresponding values of the untreated raw material or biomass are also shown for comparison.

**- Table 6 -**

| Test | Temperature | Yield | C | H | N | O | S | H/C | O/C | C/N | HCV |
|---|---|---|---|---|---|---|---|---|---|---|---|
| | °C | % | % | % | % | % | % | % | % | % | MJ/kg |
| HTC_1A | 200 | 51.5 | 52.8 | 5.7 | 1.7 | 39.5 | 0.3 | 1.3 | 0.6 | 36.2 | 21.0 |
| HTC_2A | 220 | 43.6 | 53.5 | 5.5 | 1.6 | 39.4 | 0.02 | 1.2 | 0.6 | 39.0 | 21.0 |
| HTC_3A | 240 | 44.4 | 53.9 | 5.5 | 1.4 | 39.1 | 0.1 | 1.2 | 0.5 | 44.9 | 21.1 |
| HTC_4A | 260 | 37.7 | 61.6 | 5.6 | 2.2 | 30.4 | 0.2 | 1.1 | 0.4 | 32.7 | 24.8 |
| HTC_5A | 280 | 34.3 | 70.2 | 5.5 | 2.8 | 21.4 | 0.1 | 0.9 | 0.2 | 29.2 | 28.6 |
| HTC_6A | 300 | 31.6 | 85.0 | 5.2 | 3.0 | 6.7 | 0.1 | 0.7 | 0.1 | 33.0 | 35.0 |
| HTC_1B | 200 | 47.8 | 54.9 | 5.6 | 1.7 | 37.7 | 0.1 | 1.2 | 0.5 | 38.5 | 21.8 |
| HTC_2B | 220 | 46.4 | 55.2 | 5.7 | 1.5 | 37.6 | 0.2 | 1.2 | 0.5 | 42.6 | 22.0 |
| HTC_3B | 240 | 40.3 | 60.1 | 5.6 | 2.0 | 32.2 | 0.0 | 1.1 | 0.4 | 35.2 | 24.2 |
| HTC_4B | 260 | 32.3 | 68.6 | 5.4 | 2.9 | 23.0 | 0.1 | 0.9 | 0.3 | 27.5 | 27.8 |
| HTC_5B | 280 | 30.8 | 82.0 | 5.1 | 3.1 | 9.7 | 0.1 | 0.7 | 0.1 | 30.8 | 33.5 |
| Biomass (raw material) | | | 43.1 | 5.8 | 1.5 | 49.6 | n.a. | 1.6 | 0.9 | 33.5 | 16.7 |

According to the invention, the data above confirm an expected progressive carbonisation of the starting biomass, up to a maximum total carbon content of about 85%, obtained working at 300°C for 85 min. At the same time, a decrease in oxygen content (deoxygenation) can be recognised, in particular, occurring in the temperature range between 260°C and 300°C.

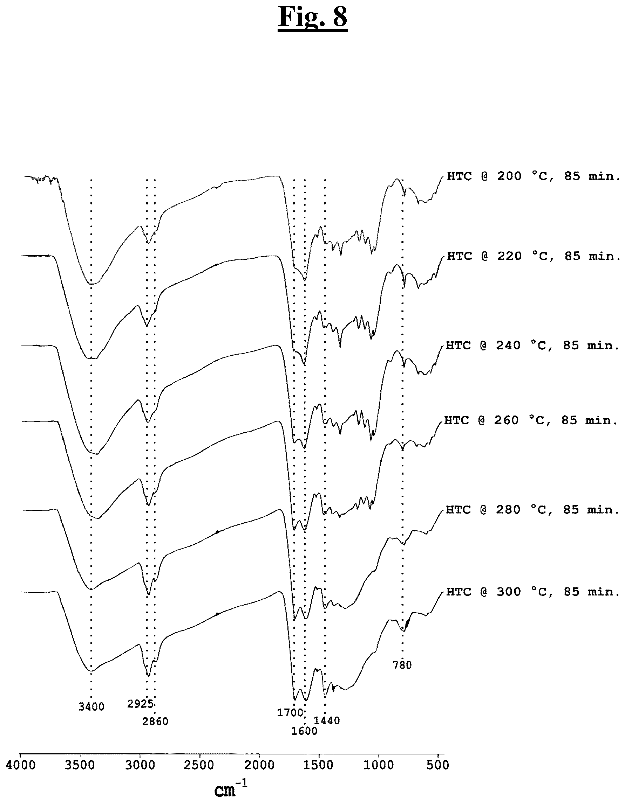

The obtained hydrochar samples were characterised by FT-IR spectroscopy, yielding the results shown in Fig. 8. The spectra show that processing temperatures between 200°C and 240°C led to very similar hydrochar materials, while, according to the invention, a transmittance decrease becomes more evident when operating above 260°C and, in particular, between 280°C and 300°C, which confirms a significant change in the chemical structure, due to the progress in carbonization.

IR analysis confirms that the 'optimum' hydrochar maintains a good chemical functionalisation degree, in particular as carboxyl groups maintained on the hydrochar surface. Residual carboxyl groups are of particular interest, as they can improve mineral salt exchange in the soil-plant system. A good functionalisation degree is a desirable condition to attain a good reactivity of the hydrochar, which, in this case, can improve the agronomic properties of a soil. Considering the results of the first group of tests, with regard to chemical-physical properties, the best hydrochar is obtained in the HTC_6A test, at a processing temperature of 300°C. In fact, this hydrochar is characterised by the highest carbon content and the lowest oxygen content, thus demonstrating the advanced carbonization. In particular, by performing the treatment at 300°C, an H/C ratio of 0.7 is obtained, which is the requisite for the formulation of soil improvers and related products, and is also considered the reference value for future European regulations. Moreover, the hydrochar obtained by the HTC_6A test shows a good total nitrogen content, which further justifies its agronomic use as proposed in the present invention.

Moreover, carbon and oxygen content modifications cooperatively lead to an increase of the higher calorific value. It is also useful to point out that the carbonisation and the deoxygenation of the biomass allow a significant 'concentration' of nitrogen in the hydrochar, which is a desirable feature for its possible use as an agricultural soil improver.

The values of some agronomically important parameters of the hydrochar produced by the tests were also determined, according to the official methods listed in Table 7, and obtaining the results shown in Table 8.

**- Table 7 -**

| | |
|---|---|
| pH | Official methods soil analysis Ministerial Decree 13/9/99, method 111.1 |
| Total phosphorus | Compost analysis methods of the Piedmont Region - 1998 - method C.8 |
| CEC | Official methods soil analysis Ministerial Decree 13/9/99, method XIII.2 |
| Ashes | Compost analysis methods of the Piedmont Region - 1998 - method C.4 (modified using the incineration temperature of 550°C) |
| Electrical conductivity | Official methods soil analysis Ministerial Decree 13/9/99, method IV.1 |

**- Table 8 -**

| Sample | CEC (meq/100g) | pH | Total phosphorus (g/kg) | Ashes (%) | Electrical conductivity [extract 1:5] mS/cm at 25°C |
|---|---|---|---|---|---|
| Raw biomass | 64 | 4.1 | 0.7 | 3.4 | 3.330 |
| HTC_1A | 50 | 4.3 | 0.7 | 3.6 | 0.798 |
| HTC_2A | 24 | 4.3 | 0.6 | 3.2 | 0.630 |
| HTC_3A | 20 | 4.7 | 1.5 | 4.6 | 0.627 |
| HTC_4A | 12 | 4.7 | 1.6 | 4.9 | 0.480 |
| HTC_5A | 8 | 5.0 | 2.0 | 4.8 | 0.419 |
| HTC_6A | 5 | 5.2 | 2.1 | 4.8 | 0.407 |
| HTC_1B | 40 | 4.2 | 0.5 | 4.2 | 0.477 |
| HTC_2B | 26 | 4.4 | 1.0 | 4.7 | 0.431 |
| HTC_3B | 14 | 4.6 | 1.7 | 4.6 | 0.452 |
| HTC_4B | 7 | 4.8 | 1.8 | 4.5 | 0.422 |
| HTC_5B | 4 | 4.9 | 2.0 | 4.6 | 0.413 |

The cation-exchange capacity (CEC) is related to the amount of negatively charged sites that are present on the substrate surface, and that are able to electrostatically retain positive ions, such as Ca²⁺, Mg²⁺ and K⁺. In order to determine the CEC, the exchange sites of a sample were saturated by treatment with three aliquots of a salt solution of BaCl₂ at pH=8.1, addition of triethanolamine, and then treating a solution of known titre of MgSO₄ added in excess. By this way, the barium adsorbed at the exchange sites and possibly present in the substrate contact solution precipitates quantitatively as BaSO₄ , while the cation exchange sites are saturated by Mg²⁺. Determining the excess Mg²⁺ in the solution by volumetric titration with EDTA allows the cation-exchange capacity to be determined.

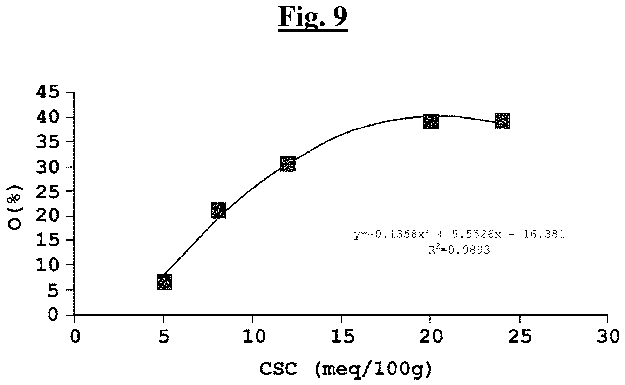

The results show a progressive decrease in CEC as the severity of the treatment increases, which can be explained by assuming that organic functional groups are removed from the biomass macro-components as the reaction temperature increases. Moreover, this is consistent with the progressive deoxygenation of the hydrochar as the temperature increases. Actually, a good correlation can be established between the residual oxygen content, as determined by elemental analysis, and the corresponding CEC values, see Fig. 9. This correlation clearly shows that an increase of the processing temperature leads to a progressive deoxygenation of hydrochar, and that the residual oxygen assessed to residual functional groups, in particular of carboxyl -COOH, which act as nutrient exchange sites in the soil-plant system.

The pH values show that the hydrochar obtained in the tests of the first group can be used in acidic cultures. Moreover, a small pH increase is observed as the processing temperature increases, which can be correlated to some degradation of the acidic, e.g. carboxyl groups.

The phosphorus content is modest, depending on the total phosphorus content of the starting biomass. A further increase of the phosphorus content in the hydrochar can be eventually achieved by subsequent addition of salts, such as ammonium phosphate or superphosphate. However, the phosphorus content mainly depends on the type of plant to be grown and on the type of soil, so it must be assessed on a case-by-case basis, starting from specific agronomic evaluations.

The ash content of the hydrochar increases as the processing temperature increases, and this can also be explained by considering that the degree of carbonisation of the matrix increases as the processing temperature increases.

Briefly, the HTC treatments of the first group of tests, performed at relatively high processing temperatures during a relatively short reaction time, led to the best results at 300°C, in test HTC_6A.

### Second group of tests

However, it has been considered that the HTC method of the invention could be even more advantageous, in comparison with such conventional treatments of pyrolysis or gasification, if carried out at lower processing temperatures, for two reasons. Firstly, lower temperatures make the hydrothermal carbonisation technologically simpler to perform, thus requiring lower investment and operating costs. Secondly, lower temperatures make the hydrothermal carbonisation more environment-friendly, as the formation of harmful by-products such as polycyclic aromatic hydrocarbons would be avoided.

Therefore, a second group of tests was performed, with the aim of significantly lowering the processing temperature below 300°C, and extending the processing time to 180 minutes. The hydrochar obtained in these tests, identified as HTC_1B ÷ HTC_5B, was characterized by evaluating the same parameters as in the first group of tests, for comparison purposes, and the results are also given in Table 6.

These data clearly show that the best hydrochar is obtained by test HTC_5B, operating at 280°C, in which similar chemical-physical properties to the hydrochar of test HTC_6A, carried out at 300°C, were obtained.

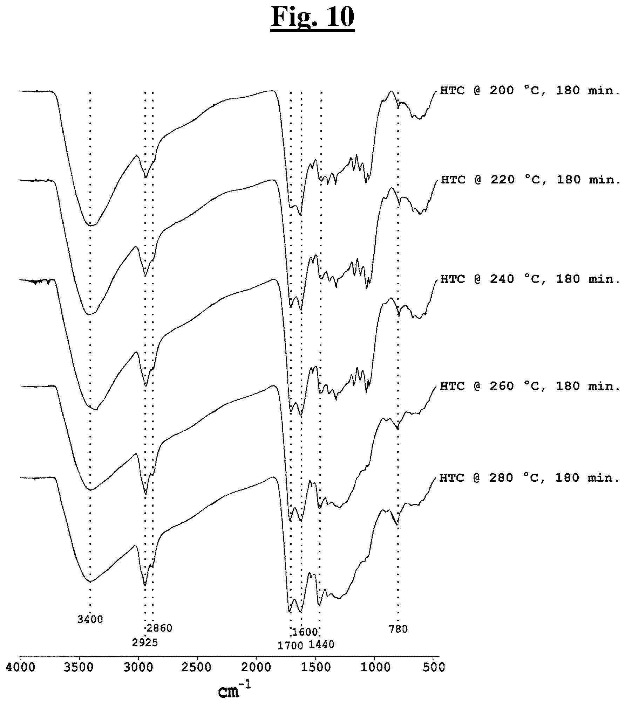

The above evidence was confirmed by the FT-IR spectra of the hydrochar, shown in Fig. 10. More in detail, The FT-IR spectra confirm the similarity among the hydrochar products obtained at processing temperatures in the range 200-240°C. In particular, for the hydrochar produced at 200°C (HTC_1B), the absorption band at 1700 cm⁻¹ is still not defined, which confirms that the reaction conditions are too mild to obtain the useful -COOH functional groups. In contrast, the absorption spectrum of hydrochar produced at 280°C (HTC_5B) is very similar to that obtained by a processing temperature of 300°C in the first group of tests (HTC_6A, Fig. 7). Actually, with particular reference to the absorption region of the ethers (1400-1100 cm⁻¹), a significant loss of resolution of these bands is observed after temperature increase, which confirms the prevalent deoxygenation of the biomass, in agreement with the results of the elemental analysis of this second group of tests, but also in agreement with the results of the elemental analysis of the first group of tests.

In particular, by using a treatment temperature of 280°C, an H/C ratio of 0.7 is ascertained, which was obtained in the first group of tests by operating at 300°C.

The values of some agronomically important parameters of the hydrochar produced by the tests were determined also in this case, according to the official methods already listed in table 7, and these new data are shown in table 8.

The characterization data concerning the second group of tests lead to the same conclusions as for the first group, in particular, with reference to the acidic pH, modest total phosphorus content, progressive decrease of CEC as the processing temperature increases, and almost stable ash content as the processing temperature changes.

The best chemical and agronomical results, obtained in tests HTC_6A and HTC_5B, have been confirmed even when treating the biomass without any agitation system, in other words mass transfer in the reaction system seems not to be an issue. Even for this reason, the invention can provide a process that is simpler than the prior art HCT processes while allowing a similar or even better quality of the final product.

### Further characterisation

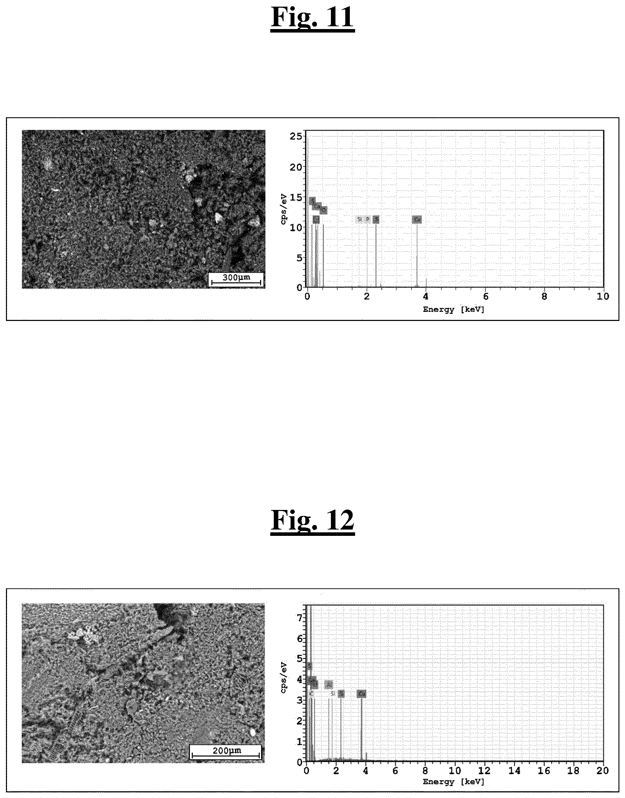

On the basis of the above results, a more in-depth chemical characterisation was carried out on the two best hydrochar products HTC_6A and HTC_5B, obtained at 300°C and 280°C in the first and second group of tests, respectively. In particular, SEM-EDS analysis was performed, obtaining the results shown in Table 9, as well as in Figs. 11 and 12.

**- Table 9 -**

| | **Mass (%)** | |
|---|---|---|
| | HTC_6A | HTC_5B |
| Carbon | 82.77 | 83.98 |
| Oxygen | 13.18 | 14.76 |
| Silicon | 0.62 | 0.13 |
| Aluminium | | 0.11 |
| Phosphorus | 0.31 | |
| Sulphur | 0.36 | 0.19 |
| Calcium | 2.76 | 0.83 |

SEM-EDS analysis confirmed the carbonisation/deoxygenation of the biomass, in agreement with the results previously reported and discussed. In addition, this analytical technique also made it possible to identify and semi-quantitatively estimate the inorganic components, in this case mainly composed of calcium salts and silicon.

The determination of the polycyclic aromatic hydrocarbon (PAH) content was also performed for the two hydrochar products HTC_6A and HTC_5B, according to the official methods provided by EPA 3445A 2007 + EPA3620C 2007 + EPA8270D 2007]. For both samples, a PAH content lower than 100 µg/kg was obtained, which is well below the upper limit of 6 mg/kg provided by the current Italian regulations, see table 1.

Table 10 shows a comparison between pyrolysis and the HTC treatment, including the most significant results from the literature and those relating to the best hydrochar obtained in the conditions of the present invention.

**- Table 10 -**

| **Raw material** | **Treatment** | **Reaction conditions** | **PAH (mg/kg)** |
|---|---|---|---|
| Beer brewers | Hydrothermal | 190°C/12h | 0.3 |
| | Pyrolysis | 800°C/30min. | 1.3 |
| Beetroot | Hydrothermal | 190°C/12h | 0.0 |
| | Pyrolysis | 800°C/30min. | 3.8 |
| Sewage sludge | Hydrothermal | Data not available | 4.9 |
| | Pyrolysis | 800°C/30min. | 18.8 |
| Wood shavings | Hydrothermal | 180°C/10h | 0.0 |
| | Pyrolysis | 800°C/30min. | 53.0 |
| Spent beet cossettes, as referred to in the present invention | Hydrothermal | HTC_6A: 300°C / 85 min. | <0.1 |
| | | HTC_5B: 280°C/3h | |

The data of Table 10 confirm that PAH production depends on both the conversion technology and the type of processed feedstock. In particular, for a same feedstock, PAH concentrations are always lower in the HTC product rather than in the corresponding product from pyrolysis. Moreover, feedstocks with a high lignin content (e.g. wood shavings) or complex feedstocks, which may include, for instance, aromatic hydrocarbon compounds (e.g. sewage sludge in Table 10), are particularly prone to the formation of PAHs via pyrolysis. On the other hand, sugary raw materials, such as beet or beer brewers' grains, in which the lignin component is almost absent, and which are clean, i.e. food waste, turned out to be optimal for completely abating PAH formation via the HTC approach. This is particularly true for the hydrochar produced from the valuable beet (Table 10), whose pulp is, however, better exploitable for sugar production, rather than for making the hydrochar products of interest here. On the other hand, in the present invention, the HTC treatment of the cossettes, a waste component of beet processing not valorised so far, makes it possible to obtain a hydrochar that fully complies with the quality standards in force for these types of products, including those relating to PAH content. In this respect, for both hydrochar products obtained with the optimum reaction conditions (HTC_6A and HTC_5B), a PAH value < 0.1 mg/kg was experimentally determined, which is well below the currently accepted European threshold value.

Even in this case, tests have been performed in the same conditions as best tests HTC_6A e HTC_5B, but without stirring the reacting biomass, obtaining products having substantially the same good properties of HTC_6A e HTC_5B products. Therefore, the agitation seems not to be a determining factor, at least at the test scale, and a possibility subsists to further simplify the industrial-size reactors while maintaining the features of the useful product.

The foregoing description of embodiments of the invention, and examples thereof, are capable of showing the invention from a conceptual point of view in such a way that others, using the known technique, will be able to modify and/or adapt in various applications such embodiments without further research and without departing from the inventive concept, and, therefore, it is understood that such adaptations and modifications will be considered equivalent to the embodiments described. The means and materials for realising the various functions may be of various kinds without departing from the scope of the invention. It is understood that the expressions or terminology used are purely descriptive and, therefore, not limiting.

## Claims

1. A method (80,90,95) for turning a sugar beet processing waste (1) into a useful product (3,5,6) by hydrothermal carbonization (HTC), said method comprising the steps of:
- prearranging (81) a treatment container (20) equipped with a heating device (25);
- prearranging (82) a sugar beet processing waste (1),
wherein said sugar beet processing waste (1) comprises:
- sugar beet cossettes;
- a determined humidity content;
- introducing (83) a feed (2) comprising said sugar beet processing waste (1) into said treatment container (20);
- heating (85) of said feed (2) in said treatment container (20) up to a predetermined processing temperature (Tt);
- maintaining (86) said feed (2) being processed in said treatment container (20) at said processing temperature (Tₜ) for a predetermined processing time (τₜ),
wherein said processing temperature (Tt) is set between 260°C and 300°C,
wherein said feed (2) includes a content of water set between 70% and 90% by weight;
wherein said processing time (τₜ) is at least 80 minutes,
wherein said processing temperature (Tt) and said processing time (τₜ) are selected in such a way to perform dehydration, condensation and aromatisation reactions of said sugar beet processing waste (1) so as to turn said sugar beet processing waste (1) into a useful product (3,5,6) having a carbon content higher than said sugar beet processing waste (1) and an oxygen and hydrogen content lower than said sugar beet processing waste (1);
- discharging (88) said useful product (3) from said treatment container (20).

2. The method (80,90,95) according to claim 1, wherein said treatment container is a tank (20) configured to be hermetically closed, and steps are provided of:
- hermetically closing (84) said treatment container (20) after said step of introducing (83) said feed, so as to cause water including said humidity content of said sugar beet processing waste (1) to evaporate at least partially during said step of heating (85) said feed, and to pressurize said treatment container (20);
- opening and depressurising said treatment container (20) after said step (86) of maintaining said feed (2) at said processing temperature (Tt).

3. The method (80,90,95) according to claim 1, wherein said processing temperature (Tt) is set between 280°C and 300°C and said processing time (τₜ) is set between 80 minutes and 200 minutes.

4. The method (80,90,95) according to claim 1, wherein said sugar beet processing waste (1) also comprises sugar beets leaves.

5. The method (80,90,95) according to claim 1, wherein said content of water of said feed (2) is substantially the same as said humidity content of said sugar beet processing waste (1).

6. The method (90,95) according to claim 1, wherein said useful product is discharged as a slurry (3) from said treatment container (20), and a step is provided of:
- filtering (91) said slurry (3), obtaining said useful product as a mud-like matter (5).

7. The method according to claim 6, wherein a step is provided of washing said mud-like useful product (5) with water, so as to remove water-soluble impurities.

8. The method according to claim 1 or 6, further comprising a step of:
- removing (92) water from said useful product (3,5) until a predetermined residual moisture content is left in said useful product (6), obtained in a substantially dry state.

9. The method according to claim 8, wherein said step (92) of removing water from said useful product (5) comprises a step of drying (92) said useful product (5) carried out after said step of filtering (91) said slurry (3).

10. A product for use in a farmland, in particular as a soil improver, comprising the useful product obtained by the method according to claims 1 to 9, and having a hydrogen-to-carbon ratio of at most 0.7.

11. Use of the useful product (3,5,6) obtained by the method according to any of claims 1 to 9 as a soil improver or as a fuel.

## Patentansprüche

1. Verfahren (80, 90, 95) zur Umwandlung eines Zuckerrübenverarbeitungsabfalls (1) in ein nützliches Produkt (3, 5, 6) durch hydrothermale Karbonisierung (HTC), wobei das Verfahren die folgenden Schritte umfasst:
- Vorbereiten (81) eines Behandlungsbehälters (20), der mit einer Heizvorrichtung (25) ausgestattet ist;
- Vorbereiten (82) eines Zuckerrübenverarbeitungsabfalls (1), wobei der Zuckerrübenverarbeitungsabfall (1) umfasst:
- Zuckerrübenschnitze;
- einen bestimmten Feuchtigkeitsgehalt;
- Einbringen (83) eines Einsatzes (2), der den Zuckerrübenverarbeitungsabfall (1) umfasst, in den Behandlungsbehälter (20);
- Erwärmen (85) des Einsatzes (2) in dem Behandlungsbehälter (20) bis zu einer vorbestimmten Verarbeitungstemperatur (Tₜ);
- Beibehalten (86) des in dem Behandlungsbehälter (20) verarbeiteten Einsatzes (2) bei der Verarbeitungstemperatur (Tₜ) für eine vorbestimmte Verarbeitungszeit (τₜ),
wobei die Verarbeitungstemperatur (Tt) zwischen 260°C und 300°C eingestellt ist,
wobei der Einsatz (2) einen Wassergehalt umfasst, der zwischen 70 und 90 Gew.-% liegt;
wobei die Verarbeitungszeit (τₜ) mindestens 80 Minuten beträgt,
wobei die Verarbeitungstemperatur (Tt) und die Verarbeitungszeit (τₜ) derart gewählt sind, um eine Dehydratisierung, Kondensation und Aromabildungsreaktionen des Zuckerrübenverarbeitungsabfalls (1) auszuführen, um den Zuckerrübenverarbeitungsabfall (1) in ein nützliches Produkt (3, 5, 6) zu verwandeln, das einen höheren Kohlenstoffgehalt als der Zuckerrübenverarbeitungsabfall (1) und einen niedrigeren Sauerstoff- und Wasserstoffgehalt als der Zuckerrübenverarbeitungsabfall (1) aufweist;
- Austragen (88) des nützliches Produkts (3) aus dem Behandlungsbehälter (20).

2. Das Verfahren (80, 90, 95) gemäß Anspruch 1, wobei der Behandlungsbehälter ein Tank (20) ist, der so konfiguriert ist, dass er hermetisch verschlossen ist, und die folgenden Schritte vorgesehen sind:
- hermetisches Verschließen (84) des Behandlungsbehälters (20) nach diesem Schritt des Einbringens (83) des Einsatzes, um zu bewirken, dass Wasser, das den Feuchtigkeitsgehalt des Zuckerrübenverarbeitungsabfalls (1) umfasst, zumindest teilweise während des Schritts des Erwärmens (85) des Einsatzes verdampft, und um den Behandlungsbehälter (20) unter Druck zu setzen;
- Öffnen und Druckentlastung des Behandlungsbehälters (20), nachdem die Schritt (86) des Beibehaltens des Einsatzes (2) bei der Verarbeitungstemperatur (Tt).

3. Das Verfahren (80, 90, 95) gemäß Anspruch 1, wobei die Verarbeitungstemperatur (Tₜ) zwischen 280°C und 300°C eingestellt wird und die Verarbeitungszeit (τₜ) zwischen 80 Minuten und 200 Minuten eingestellt wird.

4. Das Verfahren (80, 90, 95) gemäß Anspruch 1, wobei der Zuckerrübenverarbeitungsabfall (1) auch Zuckerrübenblätter umfasst.

5. Das Verfahren (80, 90, 95) gemäß Anspruch 1, wobei der Wassergehalt des Einsatzes (2) im Wesentlichen der gleiche ist wie der Feuchtigkeitsgehalt des Zuckerrübenverarbeitungsabfalls (1).

6. Das Verfahren (90, 95) gemäß Anspruch 1, wobei das nützliche Produkt als Aufschlämmung (3) aus dem Behandlungsbehälter (20) ausgetragen wird, und ein Schritt vorgesehen ist, zum
- Filtern (91) der Aufschlämmung (3), wodurch das nützliche Produkt als schlammartiges Material (5) erhalten wird.

7. Das Verfahren gemäß Anspruch 6, wobei ein Schritt zum Waschen des schlammartigen nützliche Produkts (5) mit Wasser vorgesehen ist, um wasserlösliche Verunreinigungen zu entfernen.

8. Das Verfahren gemäß Anspruch 1 oder 6, das ferner einem Schritt umfasst:
- Entfernen (92) von Wasser von dem nützlichen Produkt (3,5) bis zu einem vorbestimmten Restfeuchtigkeitsgehalt in dem in einem im Wesentlichen trockenen Zustand erhaltenen nützlichen Produkt (6) verbleibt.

9. Das Verfahren gemäß Anspruch 8, wobei der Schritt (92) des Entfernens von Wasser aus dem nützlichen Produkt (5) einen Schritt des Trocknens (92) des nützlichen Produkts (5) umfasst, der nach dem Schritt des Filterns (91) der Aufschlämmung (3) durchgeführt wird.

10. Produkt zur Verwendung im Ackerbau, insbesondere als Bodenverbesserungsmittel, umfassend das nach dem Verfahren gemäß den Ansprüchen 1 bis 9 erhaltene nützliche Produkt und mit einem Wasserstoff-Kohlenstoff-Verhältnis von höchstens 0,7.

11. Verwendung des nach dem Verfahren gemäß einem der Ansprüche 1 bis 9 erhaltenen nützliche Produkts (3, 5, 6) als Bodenverbesserungsmittel oder als Brennstoff.

## Revendications

1. Procédé (80, 90, 95) permettant de transformer des déchets de traitement de betteraves à sucre (1) en un produit utile (3, 5, 6) par carbonisation hydrothermale (HTC), ledit procédé comprenant les étapes de :
- pré-agencement (81) d'un récipient de traitement (20) équipé d'un dispositif de chauffage (25) ;
- pré-agencement (82) de déchets de traitement de betteraves à sucre (1), lesdits déchets de traitement de betteraves à sucre (1) comprenant :
- des cossettes de betteraves à sucre ;
- une teneur en humidité déterminée :
- introduction (83) d'un flux (2) comprenant lesdits déchets de traitement de betteraves à sucre (1) dans ledit récipient de traitement (20) ;
- chauffage (85) dudit flux (2) dans ledit récipient de traitement (20) jusqu'à une température de traitement prédéfinie (Tt) ;
- maintien (86) dudit flux (2) en cours de traitement dans ledit conteneur de traitement (20) à ladite température de traitement (Tt) pendant un temps de traitement prédéfini (τₜ),
ladite température de traitement (Tt) étant fixée entre 260°C et 300°C,
ledit flux (2) comprenant une teneur en eau fixée entre 70 % et 90 % en poids ;
ledit temps de traitement (τₜ) étant d'au moins 80 minutes,
ladite température de traitement (Tₜ) et ledit temps de traitement (τₜ) étant sélectionnés de manière à effectuer des réactions de déshydratation, de condensation et d'aromatisation desdits déchets de traitement de betteraves à sucre (1) de manière à transformer lesdits déchets de traitement de betteraves à sucre (1) en un produit utile (3, 5, 6) comportant une teneur en carbone supérieure à celle desdits déchets de traitement de betteraves à sucre (1) et une teneur en oxygène et en hydrogène inférieure à celle desdits déchets de traitement de betteraves à sucre (1) ;
- décharge (88) dudit produit utile (3) dudit récipient de traitement (20).

2. Procédé (80, 90, 95) selon la revendication 1, ledit récipient de traitement étant un réservoir (20) conçu pour être fermé hermétiquement, et lesdites étapes de :
- fermeture hermétique (84) dudit récipient de traitement (20) après ladite étape d'introduction (83) dudit flux, de manière à amener l'eau comprenant ladite teneur en humidité desdits déchets de transformation de betteraves à sucre (1) à s'évaporer au moins partiellement pendant ladite étape de chauffage (85) dudit flux, et à mettre sous pression ledit récipient de traitement (20) ;
- ouverture et dépressurisation dudit récipient de traitement (20) après ladite étape (86) de maintien dudit flux (2) à ladite température de traitement (Tₜ),
étant fournies.

3. Procédé (80, 90, 95) selon la revendication 1, ladite température de traitement (Tₜ) étant fixée entre 280°C et 300°C et ledit temps de traitement (τₜ) étant fixé entre 80 minutes et 200 minutes.

4. Procédé (80, 90, 95) selon la revendication 1, lesdits déchets de traitement de betteraves à sucre (1) comprenant également des feuilles de betteraves à sucre.

5. Procédé (80, 90, 95) selon la revendication 1, ladite teneur en eau dudit flux (2) étant sensiblement la même que ladite teneur en humidité desdits déchets de traitement de betteraves à sucre (1).

6. Procédé (90, 95) selon la revendication 1, ledit produit utile étant déchargé sous la forme d'une pâte (3) dudit récipient de traitement (20), et une étape de :
- filtration (91) de ladite pâte (3), obtenant ledit produit utile sous forme d'une matière (5) semblable à de la boue,
étant fournie.

7. Procédé selon la revendication 6, une étape de lavage dudit produit utile (5) semblable à de la boue avec de l'eau étant fournie, de manière à éliminer les impuretés solubles dans l'eau.

8. Procédé selon la revendication 1 ou 6, comprenant en outre une étape de :
- élimination (92) de l'eau dudit produit utile (3, 5) jusqu'à ce qu'une teneur en humidité résiduelle prédéfinie soit laissée dans ledit produit utile (6), obtenu dans un état sensiblement sec.

9. Procédé selon la revendication 8, ladite étape (92) d'élimination de l'eau dudit produit utile (5) comprenant une étape de séchage (92) dudit produit utile (5) effectuée après ladite étape de filtration (91) de ladite pâte (3).

10. Produit destiné à être utilisé dans une terre agricole, en particulier en tant qu'agent d'amélioration du sol, comprenant le produit utile obtenu par le procédé selon les revendications 1 à 9, et comportant un rapport de l'hydrogène au carbone de 0,7 au maximum.

11. Utilisation du produit utile (3, 5, 6) obtenu par le procédé selon l'une quelconque des revendications 1 à 9 comme agent d'amélioration du sol ou comme combustible.
